# EUROPÄISCHE PATENTANMELDUNG

(11) **EP 2 505 729 A1**
(43) Veröffentlichungstag der Anmeldung: **03.10.2012**
(21) Anmeldenummer: 12001331.3
(22) Anmeldetag: 29.02.2012
(51) Int. Cl.: E03F 5/22, B29C 67/24

(54) **Abwasserhebeanlage**

(30) Priorität: 29.03.2011 DE 202011004561 U
(71) Anmelder: STRATE Technologie für Abwasser GmbH, 31157 Sarstedt (DE)
(72) Erfinder: Strate, Wolf-Peter, 30880 Laatzen (DE); Hampel, Wolfgang, 30880 Laatzen (DE); Blanarsch, Hans-Jürgen, 31832 Springe (DE)
(74) Vertreter: Patentanwälte Thömen & Körner

(57) **Zusammenfassung**

Es wird eine Abwasserhebeanlage beschrieben, welche folgende Bauteile umfasst: ein Unterteil (12); ein darauf befestigbares Oberteil (14) mit einem Einlaufkasten (20), welcher zwei Zuläufe (22,24) umfasst, von denen einer mittels einer Verschlusskappe (38) verschließbar ist; ferner einen Sperrstoffsammelraum (16); ferner ein Gehäuse (26) mit einem Schließelement (28), sowie mindestens eine von einem Motor (50) antreibbare Pumpe (48) mit zugeordnetem Pumpenspiralgehäuse (42) und Laufrad (46). Bei einer solchen Abwasserhebeanlage sind alle Bauteile mit Ausnahme des Motors Formteile aus Kunststoff und werden im RIM-Verfahren (Reaction Injection Moulding) hergestellt.

## Beschreibung

Die Erfindung betrifft eine Abwasserhebeanlage gemäß dem Oberbegriff des Schutzanspruchs 1.

Abwasserhebeanlagen dieser Art sind unter anderem durch die Dokumente DE 36 07 353 C2 und DE 195 19 305 C2 bereits bekannt. Der Zweck solcher Abwasserhebeanlagen besteht darin, Abwässer, die in Ein- oder Mehrfamilienhäusern, in Gaststätten oder in öffentlichen Gebäuden anfallen, aufzunehmen und von einem niedrigen Niveau aus über eine Druckrohrleitung auf ein höheres Niveau in die Kanalisation zu pumpen. Darüber hinaus werden Abwasserhebeanlagen in der kommunalen Ortsentwässerung eingesetzt und fördern das aus der Kanalisation kommende Abwasser über Druckrohrleitungen zu Kläranlagen.

Dabei fließt das Abwasser während des Füllvorganges zunächst in einen Sperrstoffsammelraum, in welchem die im Abwasser mitgeführten Sperrstoffe bzw. Feststoffe durch mindestens eine Trennklappe zurückgehalten werden, wobei jeder Trennklappe eine Klappenöffnung zugeordnet ist. Die Klappenöffnung ist durch die Trennklappe nicht vollständig, sondern nur teilweise verschlossen. Das dadurch "vorgereinigte" sperrstofffreie Abwasser fließt danach durch den verbleibenden freien Teil der Klappenöffnungen in einen Sammelbehälter.

Wenn der Sammelbehälter gefüllt ist, wird über ein Niveaumesssystem die Pumpe eingeschaltet und das vorgereinigte Abwasser wird nunmehr durch die Klappenöffnungen, die jetzt vollständig von den Trennklappen freigegeben sind, sowie durch den Sperrstoffsammelraum in eine Druckrohrleitung zur Kanalisation gefördert. Die im Sperrstoffsammelraum zurückgehaltenen Sperrstoffe bzw. Feststoffe werden dabei mitgenommen und ebenfalls in die Druckrohrleitung gespült. Während dieses Vorganges ist die in den Sperrstoffsammelraum mündende Einlaufleitung für das Abwasser gesperrt. Während dieses Vorganges kann zufließendes Abwasser über einen Rechen, der die Sperrstoffe zurückhält, und einen Bypasskanal auch direkt in den Sperrstoffsammelraum gelangen.

Wenn der Sammelbehälter entleert ist, wird der Fördervorgang durch das Abschalten der Pumpe unterbrochen und es kann jetzt wieder der voranstehend beschriebene Füllvorgang des Sammelbehälters erfolgen. Durch ein Schließelement, auch Rückschlagklappe genannt, wird ein Rückfluss des abgepumpten Abwassers verhindert.

Neben den beschriebenen Abwasserhebeanlagen gibt es auch einfachere Abwasserhebeanlagen, die keinen Sperrstoffsammelraum besitzen und somit auf ein

Zurückhalten der Sperrstoffe bzw. Feststoffe verzichten. Dabei besteht allerdings die Gefahr, dass die Pumpe wegen der Sperrstoffe verstopfen kann.

Die bekannten Abwasserhebeanlagen mit Sperrstoffsammelraum bestehen üblicherweise aus Aluminiumguss, Grauguss oder Stahl und besitzen deshalb in nachteiliger Weise ein großes Gewicht, wodurch der manuelle Transport z.B. in einen Keller einer Wohnanlage oder in einen separaten Schacht und die manuelle Handhabung bei der Installation der Abwasserhebeanlage erschwert wird.

Weitere Nachteile der bekannten Abwasserhebeanlagen sind die häufig unzureichende Korrosionsbeständigkeit von Grauguss oder Stahlbauteilen sowie die hohen Betriebsgeräusche der vorgenannten Abwasserhebeanlagen.

Der Erfindung liegt die Aufgabe zugrunde, ohne Beeinträchtigung der Wirkungsweise der Abwasserhebeanlage eine neue Abwasserhebeanlage zu schaffen, die einen leichten Transport sowie eine einfache manuelle Handhabung bei der Installation erlaubt. Daneben soll die neue Abwasserhebeanlage korrosionsbeständig sein und leise arbeiten.

Die Lösung dieser Aufgabe erfolgt bei der im Oberbegriff des Schutzanspruchs 1 genannten Abwasserhebeanlage durch die Merkmale des kennzeichnenden Teils des Schutzanspruchs 1.

Mit Ausnahme des Motors sind bei der Erfindung alle Bauteile Formteile aus Kunststoff, der im sogenannten RIM-Verfahren (Reaction Injection Moulding) hergestellt ist. Es kann auch Kunststoff zur Anwendung gelangen, der nach einem dem RIM-Verfahren gleichgestellten, ähnlichen Verfahren hergestellt wird. Nur der Motor ist wegen der benötigten elektrischen Teile nicht aus Kunststoff.

Neben den aus Kunststoff bestehenden Teilen umfasst die Abwasserhebeanlage natürlich noch Zusatzteile, die für den Zusammenbau und den Betrieb benötigt werden, wie Dichtungen, Motorwelle, Niveaumesssystem und Sensor und gegebenenfalls Schrauben und Muttern, die neben dem Motor naturgemäß nicht aus Kunststoff bestehen.

Wenn sämtliche Bauteile mit Ausnahme des Motors und der genannten Zusatzteile Formteile aus Kunststoff sind, hat dies den gravierenden Vorteil, dass das Gewicht der neuen Abwasserhebeanlage entscheidend verringert wird. Gegenüber den bekannten Abwasserhebeanlagen z.B. aus Aluminiumguss beträgt die Gewichtsersparnis etwa 50 Prozent. Die Abwasserhebeanlage lässt sich daher sehr leicht von Hand transportieren und kann in einem Keller, Schacht usw. zur Installation auch an schwer zugänglichen Orten installiert werden.

Ein weiterer Vorteil der Erfindung besteht darin, dass die Schallabstrahlung z. B. in Form von Lärm, Betriebsgeräuschen und Dröhnen deutlich reduziert wird. Es kommt deshalb ein duroplastischer Kunststoff wie z.B. Polyurethan zur Anwendung. Dieser Kunststoff weist eine dauerhaft engmaschig und dreidimensional vernetzte Makromolekülstruktur auf und wird im RIM-Verfahren hergestellt, welches die Herstellung schalltechnisch optimierter Bauteile ermöglicht.

Das Verfahren, nach welchem der Kunststoff hergestellt ist, erlaubt die Gestaltung von Bauteilen auch mit großen Wanddicken, so dass die erforderliche Masse erreicht wird, um eine deutlich reduzierte Schallabstrahlung zu bewirken. Die spezielle Bauteilgeometrie ergibt zudem Kunststoffbauteile von hoher Steifigkeit und mit Eigenfrequenzen, die außerhalb des problematischen Resonanz- Frequenzbereiches liegen.

Ein entsprechender Vorteil gilt auch für die Korrosionsbeständigkeit der Grauguss- oder Stahlteile, die bei der Erfindung aus diesen Kunststoffen bestehen.

Es sind zwar schon Abwasserhebeanlagen mit oder ohne Sperrstoffsammelraum bekannt, deren Sammelbehälter aus Kunststoff sind -z. B. aus Polyethylen (PE) -, deren Pumpen und Rückschlagklappen jedoch aus schwereren Materialien wie Grauguss oder Stahl bestehen. Oftmals werden diese Bauteile aus Gewichtsgründen nicht direkt auf den Kunststoff-Sammelbehälter sondern (zur besseren Gewichtsverteilung) zunächst auf eine Guss- oder Stahlplatte montiert und diese Platte dann mit dem Behälter verbunden. Diese bekannten Abwasserhebeanlagen sind deutlich schwerer als die erfindungsgemäße Abwasserhebeanlage.

Gemäß einer zweckmäßigen Ausgestaltung der Erfindung ist vorgesehen, dass bei der neuen Abwasserhebeanlage die betreffenden Bauteile im RIM-Verfahren hergestellt werden und aus einem Duroplast, dem Kunststoff Polyurethan (PUR), bestehen.

Polyurethan besitzt eine hohe Abriebfestigkeit, wodurch sich in vorteilhafter Weise die Lebensdauer der Abwasserhebeanlage verlängern lässt. Ein Abrieb erfolgt beispielsweise durch im Wasser befindlichen Scheuer- und Polierpigmente, Sand, kleine Steine, Split oder andere abrasive Stoffe. Diese Stoffe wirken auf die Wände der Bauteile ein, insbesondere das Pumpengehäuse und das Laufrad der Pumpe.

Obwohl die Abwasserhebeanlage gegenüber herkömmlichen Anlagen, die nicht aus Kunststoff sind, erheblich leichter ist, ist die erforderliche Festigkeit und Steifigkeit gegeben. Die Herstellung von Polyurethan im RIM-Verfahren ermöglicht eine funktionsgerechte, eigensteife und formstabile Konstruktion der Bauteile, so dass die Erfindung vergleichbare Festigkeits- und Steifigkeitswerte wie eine Abwasserhebeanlage aus z. B. Aluminiumguss erreichen kann.

Thermoplastische Kunststoffe wie z. B. Polyethylen können nicht im RIM-Verfahren hergestellt oder verarbeitet werden; sie lassen sich auch mit anderen Verfahren nicht unter gleichen wirtschaftlichen Bedingungen in den benötigten Wanddicken erzeugen und sind daher nicht optimal für diesen Anwendungsfall geeignet.

Eine hohe Festigkeit und Steifigkeit sind erforderlich, weil die Pumpe der Abwasserhebeanlage einen Druck aufbaut, der mehrere bar, beispielsweise 3 bar, betragen kann.

Die vorteilhafte Kombination aus Werkstoff, Herstellverfahren und Bauteilgeometrie lässt sich mit anderen Verfahren oder Kunststoffen bisher unter wirtschaftlichen Bedingungen nicht erzielen.

In weiterer vorteilhafter Ausgestaltung der Erfindung sind die Bauteile der Abwasserhebeanlage durch einen Klebstoff und/oder durch Schraubverbindungen miteinander verbunden.

In einer anderen zweckmäßigen Ausgestaltung der Erfindung ist vorgesehen, dass die zum Verschließen eines Zulaufes vorgesehene Verschlusskappe an ihrem vorderen Ende einen Strömungsumlenker aufweist.

Dies ist von besonderem Vorteil, wenn die Abwasserhebeanlage zwei einander gegenüber liegende Zuläufe besitzt. Bei nur einem Zulauf kann es vorkommen, dass dieser je nach Einbaulage der Abwasserhebeanlage nicht mit dem das Abwasser zuführende Zulaufrohr verbunden werden kann. Wenn dagegen zwei Zuläufe vorgesehen sind, stellt sich dies Problem nicht ein.

Der eine zugängliche Zulauf wird mit dem Zulaufrohr verbunden, und der gegenüber liegende Zulauf wird dann mit der erwähnten Verschlusskappe verschlossen, um zu verhindern, dass das Abwasser durch den anderen Zulauf wieder herausläuft. Der Strömungsumlenker der Verschlusskappe bewirkt nun in vorteilhafter Weise, dass das zulaufende Abwasser nicht gegen eine senkrechte Wand trifft, sondern durch den Strömungslenker kreisbogenförmig umgelenkt wird und in die Abwasserhebeanlage fließt. Dadurch wird die Ablagerung von Sperrstoffen in diesem Bereich vermieden.

Eine weitere vorteilhafte Ausgestaltung der Erfindung besteht darin, dass der Einlaufkasten mit einem Deckel aus Kunststoff abgeschlossen ist, und dass der Deckel im Bereich der Zuläufe eine Verdickung aufweist, die einen Teilbogen bildet. Zusammen mit dem Strömungsumlenker der Verschlusskappe bildet dieser Teilbogen eine rohrförmige Krümmung für das zufließende Abwasser. Das Abwasser trifft somit auf einen Rohrbogen und kann ungehindert in die Abwasserhebeanlage einfließen.

Dabei ist es unerheblich, welcher der beiden Zuläufe mit der Verschlusskappe verschlossen wird, denn in jedem Fall bildet sich in Verbindung mit der Verdickung des Deckels die angesprochene rohrförmige Krümmung.

Nachfolgend wird die Erfindung an Hand des in der Zeichnung dargestellten Ausführungsbeispiels näher erläutert. Es zeigen:
- Fig. 1: eine perspektivische Darstellung eines Ausführungsbeispiels einer erfindungsgemäßen Abwasserhebeanlage,
- Fig. 2: eine vereinfachte Querschnittsansicht der Abwasserhebeanlage gemäß Fig. 1,
- Fig. 3: eine perspektivische Darstellung einer Verschlusskappe und
- Fig. 4: eine Querschnittsansicht der Verschlusskappe gemäß Fig. 3.

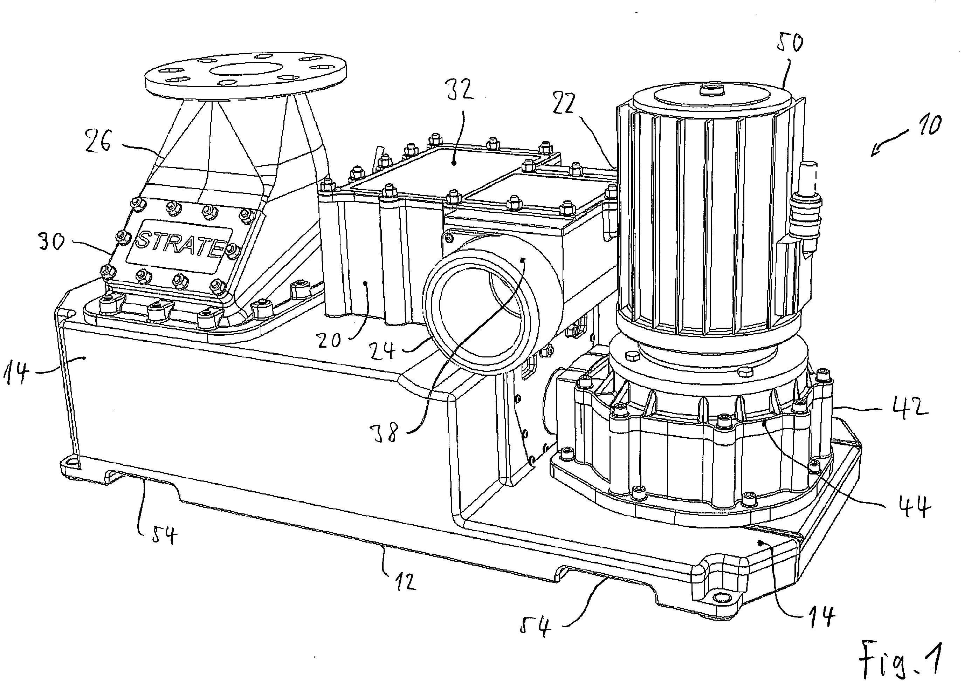

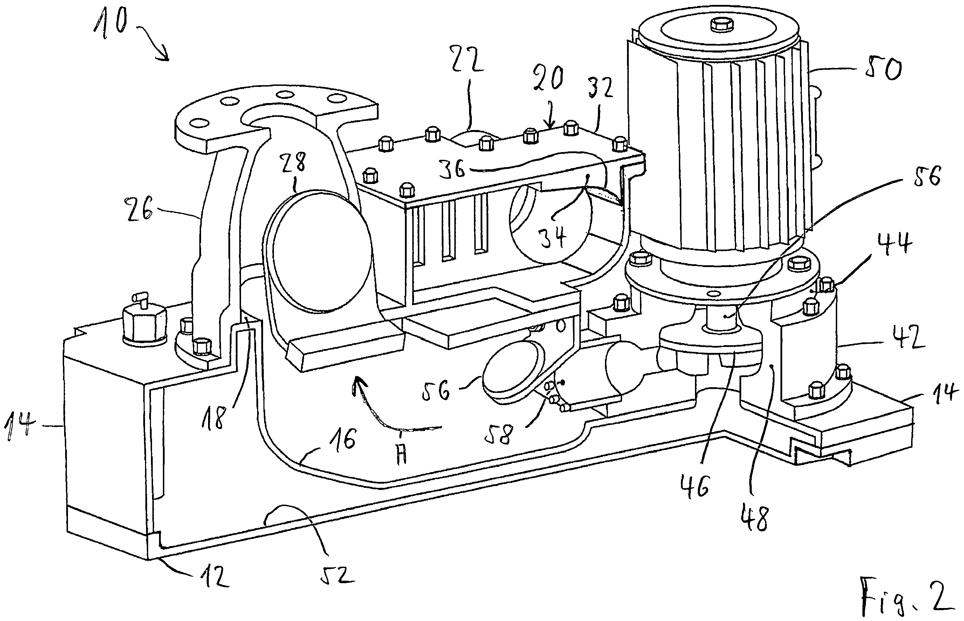

Da in der perspektivischen Darstellung gemäß Fig. 1 die inneren Bauteile der Abwasserhebeanlage 10 nicht zu erkennen sind, wird nachfolgend neben Fig. 1 auch auf die Querschnittsansicht gemäß Fig. 2 Bezug genommen.

Die Abwasserhebeanlage 10 umfasst ein Unterteil 12 und ein Oberteil 14. Auf dem Oberteil 14 befindet sich ein Einlaufkasten 20 mit zwei Zuläufen 22 und 24 für das zufließende Abwasser. Der Einlaufkasten 20 ist mit einem Deckel 32 verschlossen.

Weiterhin befindet sich auf dem Oberteil 14 eine Pumpe 48, bestehend aus einem Spiralgehäuse 42, einem Zwischengehäuse 44 sowie einem Laufrad 46. Auf dem Zwischengehäuse 44 ist ein Motor 50 angeordnet, dessen Motorwelle 56 das Pumpenlaufrad aufnimmt und die Pumpe 48 antreibt.

Es ist noch darauf hinzuweisen, dass der Deckel 32 des Einlaufkastens 20 auf der inneren Seite im Bereich der beiden Zuläufe 22 und 24 mit einer Verdickung 34 versehen ist, die einen Teilbogen 36 bildet. Auf die Bedeutung der Verdickung 34 wird weiter unten noch eingegangen.

Das Oberteil 14 weist noch einen Dichtungssitz 18 für ein Schließelement 28 auf, und ferner ist auf dem Oberteil 14 ein Gehäuse 26 befestigt, an dessen oberen Teil eine hier nicht dargestellte Druckrohrleitung anzuschließen ist, welche das abgepumpte Abwasser in die Kanalisation leitet. Durch einen Revisionsdeckel 30 wird eine dahinter befindliche Öffnung des Gehäuses 26 verschlossen.

Zur Erleichterung für die Handhabung der Abwasserhebeanlage befinden sich im Unterteil noch Griffmulden 54, durch die das Tragen der Abwasserhebeanlage erleichtert wird. Das Oberteil 14 erhält einen Sperrstoffsammelraum 16, und das Unterteil 12 und das Oberteil 14 bilden gemeinsam einen darunter befindlichen Sammelbehälter 52.

Die Schnittansicht gemäß Fig. 2 zeigt einen Betriebszustand der Abwasserhebeanlage 10, in welchem das Abwasser in Richtung des Pfeils A abgepumpt wird. Dabei gelangt das im Sammelbehälter 52 befindliche vorgereinigte Abwasser durch die Einwirkung der Pumpe 48 mit dem Laufrad 46 über eine Klappenöffnung 58 in den Sperrstoffsammelraum 16. Die Klappenöffnung 58 ist durch eine Klappe 56 bei diesem Vorgang freigegeben. Beim Abpumpen der Abwasserhebeanlage 10 werden die im Sperrstoffsammelraum 16 befindlichen Teile und Feststoffe mitgeführt und gelangen zusammen mit dem Wasser aus dem Sammelbehälter in die Kanalisation.

Die Besonderheit bei der neuen Abwasserhebeanlage 10 besteht darin, dass mit Ausnahme des Motors 50 und der erwähnten Zusatzteile sämtliche Bauteile Formteile aus Polyurethan sind, welches im RIM-Verfahren hergestellt wird.

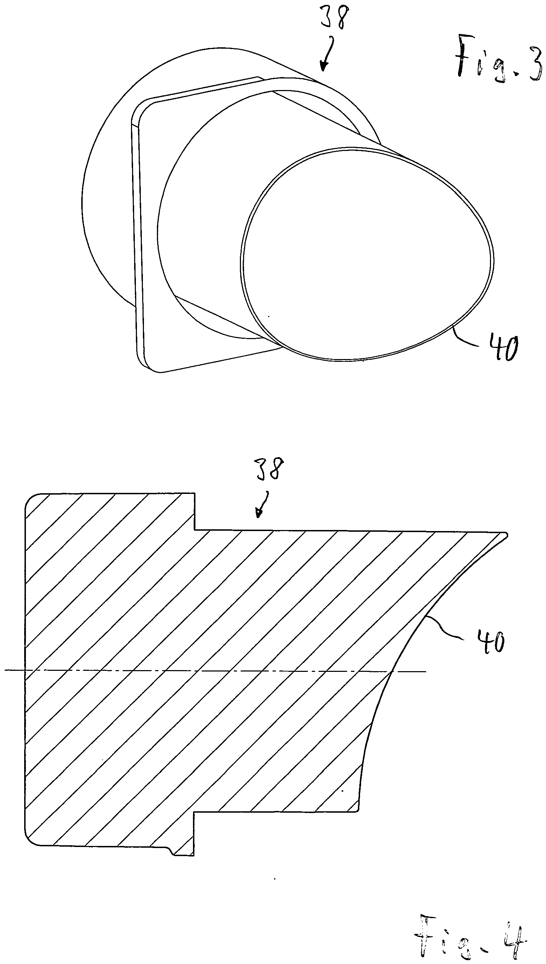

Fig. 3 und 4 zeigen jeweils eine besondere Ausgestaltung einer Verschlusskappe 38, einmal in einer perspektivischen Darstellung und einmal in einer Querschnittsansicht. Die Verschlusskappe 38 besteht ebenfalls aus im RIM-Verfahren hergestelltem Polyurethan.

Wie zuvor erwähnt, besitzt die Abwasserhebeanlage zwei Zuläufe 22 und 24. Nachdem auf Grund des Betriebsstandortes der Abwasserhebeanlage 10 feststeht, welcher der beiden Zuläufe 22, 24 mit dem Zulaufrohr für das Abwasser bebunden wird, muss der andere Zulauf verschlossen werden, und dies erfolgt mit der Verschlusskappe 38, die nach Art eines Stopfens in den betreffenden Zulauf eingeschoben und danach gesichert wird.

Wie Fig. 3 und Fig. 4 zeigen, besitzt der in den betreffenden Zulauf eingeschobene vordere Teil der Verschlusskappe einen Strömungsumlenker 40, der einen kreisförmigen Bogen beschreibt. Dieser Strömungsumlenker 40 bildet zusammen mit dem Teilbogen 36 der Verdickung 34 (vgl. Fig. 2) eine rohrförmige Krümmung für das zulaufende Abwasser. Das zulaufende Abwasser wird somit entlang einer Rohrkrümmung in den Sperrstoffsammelraum 16 geführt.

Die soweit beschriebene Abwasserhebeanlage 10 kann beispielsweise bei einem Wohnhaus eingesetzt werden.

### Bezugszeichenliste

### (ist Teil der Beschreibung)

- 10: Abwasserhebeanlage
- 12: Unterteil
- 14: Oberteil
- 16: Sperrstoffsammelraum
- 18: Dichtungssitz
- 20: Einlaufkasten
- 22: Zulauf
- 24: Zulauf
- 26: Gehäuse
- 28: Schließelement
- 30: Revisionsdeckel
- 32: Deckel
- 34: Verdickung
- 36: Teilbogen
- 38: Verschlusskappe
- 40: Strömungsumlenker
- 42: Pumpenspiralgehäuse
- 44: Zwischengehäuse
- 46: Laufrad
- 48: Pumpe
- 50: Motor
- 52: Sammelbehälter
- 54: Griffmulde
- 56: Motorwelle

## Patentansprüche

1. Abwasserhebeanlage (10), die folgende Bauteile umfasst: ein als Boden ausgebildetes Unterteil (12);, ein darauf befestigbares Oberteil (14) mit einem Einlaufkasten (20) mit mindestens einem Zulauf (22; 24), von denen einer mittels einer Verschlusskappe (38) verschließbar ist, wahlweise mindestens einen Sperrstoffsammelraum (16), ferner mindestens ein Gehäuse (26) für ein Schließelement (28), sowie mindestens eine von einem Motor (50) über eine Motorwelle (56) antreibbare Pumpe (48) mit zugeordnetem Pumpenspiralgehäuse (42) und Laufrad (46), wobei das Unterteil (12) und das Oberteil (14) einen Sammelbehälter (52) der Abwasserhebeanlage (10) bilden, **dadurch gekennzeichnet, dass** alle Bauteile mit Ausnahme des Motors (50) Formteile aus Kunststoff sind, die im sogenannten RIM-Verfahren (Reaction Injection Moulding) oder diesem Verfahren entsprechende und ähnliche Verfahren hergestellt sind.

2. Abwasserhebeanlage nach Anspruch 1, **dadurch gekennzeichnet, dass** alle Bauteile mit Ausnahme des Motors (50) aus im RIM-Verfahren hergestelltem Polyurethan (PUR) bestehen.

3. Abwasserhebeanlage nach Anspruch 1 oder 2, **dadurch gekennzeichnet, dass** sämtliche Bauteile durch Kleber und/oder durch Schraubverbindungen miteinander verbunden sind.

4. Abwasserhebeanlage nach Anspruch 1 und/oder 2, **dadurch gekennzeichnet, dass** die zum Verschließen eines Zulaufes (22; 24) vorgesehene Verschlusskappe (38) an ihrem vorderen Ende einen Strömungsumlenker (40) aufweist.

5. Abwasserhebeanlage nach Anspruch 4, **dadurch gekennzeichnet, dass** der Einlaufkasten (20) mit einem Deckel (32) aus Kunststoff abgeschlossen ist, und dass der Deckel (32) im Bereich der Zuläufe (22; 24) eine Verdickung (34) aufweist, die einen Teilbogen (36) bildet, und dass der Strömungsumlenker (40) der Verschlusskappe (38) und der Teilbogen (36) eine rohrförmige Krümmung bilden.
